# EUROPEAN PATENT SPECIFICATION

(11) **EP 2 985 136 B1**
(45) Date of publication and mention of the grant of the patent: **22.05.2019**
(21) Application number: 15180548.8
(22) Date of filing: 11.08.2015
(51) Int. Cl.: B29D 30/16

(54) **METHOD FOR MANUFACTURING PNEUMATIC TIRES**
VERFAHREN ZUR HERSTELLUNG VON LUFTREIFEN
PROCÉDÉ DE FABRICATION DE PNEUMATIQUES

(30) Priority: 12.08.2014 JP 2014164542
(43) Date of publication of application: 17.02.2016
(73) Proprietor: Sumitomo Rubber Industries, Ltd., Kobe-shi, Hyogo 651 (JP)
(72) Inventor: KOHARA, Kei, Kobe-shi,, Hyogo 651-0072, (JP); SUGIYAMA, Naoki, Kobe-shi,, Hyogo 651-0072, (JP)
(74) Representative: TBK

(56) References cited:
- EP-A1- 2 055 467
- EP-A2- 0 481 805
- JP-A- 2011 031 582
- US-A1- 2002 056 496
- US-A1- 2008 011 409
- US-A1- 2013 248 085

## Description

### Field of the Invention

The present invention relates to a method using a rigid core for manufacturing a pneumatic tire, more specifically, to a method for reducing molding defects.

### Background Art

A conventional method using a rigid core has been proposed to manufacture a pneumatic tire. A rigid core has an external surface for molding the surface of a tire cavity, for example. On the outer side of a rigid core, tire-forming members such as inner-liner rubber, insulation rubber (indicating rubber to enhance adhesiveness between the inner liner and a carcass ply; the same description being applicable when it appears later) and a carcass ply are laminated in that order to form a raw tire. The raw tire is vulcanized along with the rigid core to mold a pneumatic tire.

In a method using a rigid core to manufacture a pneumatic tire, a narrow unvulcanized ribbon-like rubber strip is used to form inner-liner rubber and insulation rubber. To form an inner liner on the external surface of a rigid core, a first rubber strip is helically wound, for example, from one bead side toward the other bead side. In addition, to form a pair of insulation rubber members respectively on the left- and right-side surfaces of the inner liner, a second rubber strip is helically wound, for example, from the other bead side toward the one bead side. During those winding procedures, the rigid core is rotated in the same direction.

Using the method above, the second rubber strip is wound to cross the first rubber strip since the first rubber strip and the second rubber strip are helically wound in different directions. At portions where the two rubber strips cross, the adhesion interface is roughened, and much air tends to be trapped between the rubber strips. Such trapped air may cause molding defects during the vulcanization process, resulting in an undesirable exterior appearance of a tire.

Patent Publication 1 below is mentioned as related technology. It discloses a method for manufacturing a pneumatic tire comprising: by helically winding a first rubber strip made of a first composition on the outer side of a drum in a circumferential direction of the drum, a step for forming a first rubber layer where first overlapped portions are formed in a helical pattern by overlapping side edges of the first rubber strip; and by helically winding a second rubber strip made of a second composition on the external surface of the first rubber layer in the same direction as that of the first rubber strip, a step for forming a second rubber layer where second overlapped portions are formed in a helical pattern by overlapping side edges of the second rubber strip, wherein, in the step for forming the second rubber layer, the second rubber strip is wound so as to form a second overlapped portion between adjacent first overlapped portions. However, the technology is not related to a method using a rigid core for manufacturing a pneumatic tire.

US 2013/248085 A1 discloses a ribbon-shaped strip used for an inner liner and a method for manufacturing the strip. The strip is to be wound on an outer circumferential surface of a tire molding drum or a core body to form an inner liner. The strip has an inner layer disposed inwardly in a tire and an outer layer disposed outwardly in the tire. The inner layer and the outer layer are bonded to each other with their ends offset by 0.5 mm to 30 mm in a widthwise direction. At least one layer of the inner layer is formed of an elastomer composition containing a styrene-isobutylene-styrene block copolymer. At least one layer of the outer layer is formed of a thermoplastic elastomer composition.

Reference is also made to US 2002/056496 A1, which also discloses a method for manufacturing a pneumatic tire.

### PRIOR ART PUBLICATION

### PATENT PUBLICATION

Patent Publication 1: JP 2011-31582 A
Patent Publication 2: US 2013/248085 A1
Patent Publication 3: US 2002/056496 A1

### SUMMARY OF THE INVENTION

### PROBLEMS TO BE SOLVED BY THE INVENTION

The present invention was conceived in view of the above problems. Its main objective is to provide a manufacturing method capable of reducing molding defects in the production of a pneumatic tire.

### SOLUTIONS TO THE PROBLEMS

One aspect of the present invention is a method for manufacturing a pneumatic tire using a rigid core having an external surface to form the inner cavity of a tire. The method includes the following steps: by helically winding a first rubber strip made of a first composition on the outer side of a rigid core in a circumferential direction of the core, a step for forming a first rubber layer where first overlapped portions are formed in a helical pattern by overlapping side edges of the first rubber strip; and by helically winding a second rubber strip made of a second composition on the external surface of the first rubber layer in the same direction as that of the first rubber strip, a step for forming a second rubber layer where second overlapped portions are formed in a helical pattern by overlapping side edges of the second rubber strip. In the step for forming a second rubber layer, the second rubber strip is wound so as to form a second overlapped portion between adjacent first overlapped portions. In the method for manufacturing a pneumatic tire related to the present invention, the step for forming a first rubber layer includes a step for increasing the thickness of the first rubber layer in a buttress region by reducing the pitch when winding the first rubber strip in the buttress region of the rigid core.

In the method for manufacturing a pneumatic tire related to the present invention, the first rubber layer corresponds to an inner liner that forms the tire inner cavity, for example, and the second rubber layer corresponds to an insulation layer, for example, provided on the outer side of the inner liner on a side surface of the tire.

In the step for forming a second rubber layer of the method for manufacturing a pneumatic tire related to the present invention, it is an option for the second rubber strip to be wound so as to form a space between first and second overlapped portions adjacent to each other.

### EFFECTS OF THE INVENTION

The method for manufacturing a pneumatic tire related to the present invention includes the following steps: by helically winding a first rubber strip made of a first composition on the outer side of a rigid core in a circumferential direction of the core, a step for forming a first rubber layer where first overlapped portions are formed in a helical pattern by overlapping side edges of the first rubber strip; and by helically winding a second rubber strip made of a second composition on the external surface of the first rubber layer in the same direction as that of the first rubber strip, a step for forming a second rubber layer where second overlapped portions are formed in a helical pattern by overlapping side edges of the second rubber strip. Moreover, in the step for forming a second rubber layer, the second rubber strip is wound so as to form a second overlapped portion between adjacent first overlapped portions.

According to the aforementioned manufacturing method, the second rubber strip is wound parallel, or at an angle close to parallel, to the first rubber strip. Such a setting contributes significantly to preventing the first rubber strip and the second rubber strip from crossing, and to forming a flat adhesion interface. In addition, since such a setting prevents air from being trapped between the first and second rubber strips, molding defects during the vulcanization process are also prevented. Moreover, the laminate made up of the first and second rubber layers is less likely to show variations in its thickness. Accordingly, the laminate adheres well to other members, thus contributing to enhanced tire productivity.

### BRIEF DESCRIPTION OF THE DRAWINGS

FIG. 1 is a cross-sectional view showing an example of the pneumatic tire produced by a manufacturing method related to the present invention;
FIG. 2 is a perspective view showing an example of the apparatus for manufacturing a pneumatic tire to be used in the manufacturing method related to the present invention;
FIG. 3 is an enlarged cross-sectional view of a rigid core illustrating a step for forming an inner liner;
FIG. 4 is an enlarged cross-sectional view of a rigid core illustrating a step for forming an insulation layer;
FIG. 5 is a partially enlarged view showing the bead-forming surface on the right side of the rigid core shown in FIG. 4; and
FIG. 6 is a partially enlarged view showing the right half of the rigid core to illustrate the inner liner formed by an embodiment of the present invention.

### DETAILED DESCRIPTION OF THE EMBODIMENTS

In the following, the present invention is described with reference to the accompanying drawings.

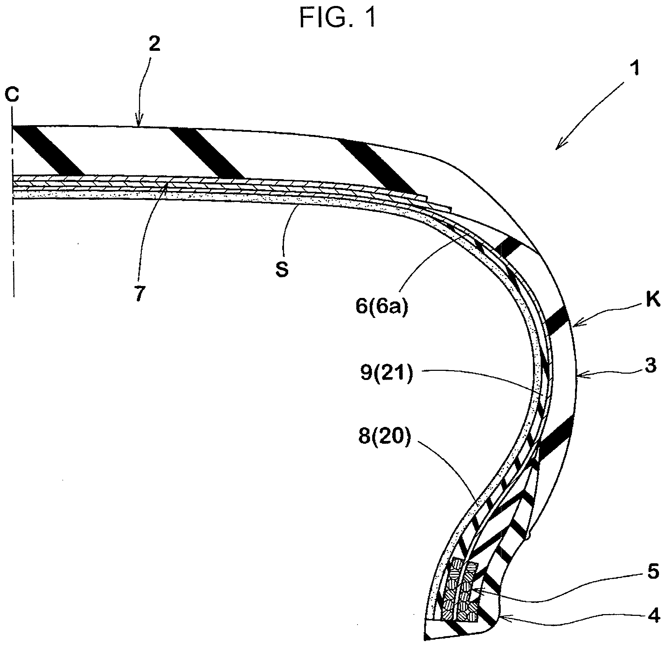

FIG. 1 shows a right-half cross-sectional view taken at the meridian of a pneumatic tire 1 (hereinafter may also be referred to simply as a "tire") produced by a method illustrating the present invention. Pneumatic tire 1 of the present embodiment is used preferably for a passenger car, for example.

Tire 1 includes carcass 6 having carcass ply 6a extending from tread 2 through sidewall 3 to reach bead core 5 of bead section 4; belt layer 7 positioned on the tire radially outer side of carcass 6 and on the inner side of tread 2; inner liner 8 provided on the inner side of carcass 6 and forming inner cavity S of the tire; and insulation layer 9 positioned between carcass 6 and inner liner 8. Insulation layer 9 of the present embodiment is provided only on side surface (K) positioned on each of both sides of the tire, and is provided in no other section such as tread 2.

Inner liner 8 is made of a rubber composition with excellent air impermeability properties and is capable of suppressing leakage of air in the tire inner cavity.

Insulation layer 9 is made of a rubber composition with excellent adhesiveness properties, and is preferred to contain natural rubber, for example. Insulation layer 9 contributes to improving adhesiveness between carcass 6 and inner liner 8, thereby enhancing durability.

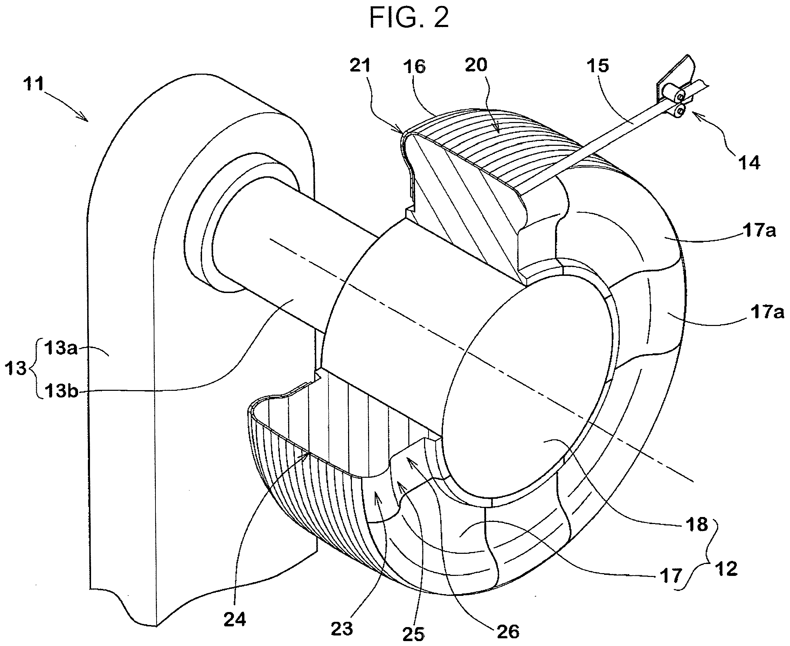

FIG. 2 is a perspective view schematically showing a production apparatus 11 used for manufacturing tire 1 of the present embodiment. As shown in FIG. 2, production apparatus 11 includes the following, for example: rigid core 12 having an external surface to form tire inner cavity S; support device 13 to support rigid core 12; and applicator 14 to continuously supply narrow ribbon-like rubber strips 15, 16 to rigid core 12. To reduce production time, it is preferred to equip multiple applicators 14 so that one applicator is available for each of rubber strips 15, 16.

Support device 13 is structured to include support frame 13a and center axis 13b; support frame 13a is arranged on a floor surface or the like, and one end of center axis 13b is supported by support frame 13a to be rotatable. Rigid core 12 is connected to the other end of center axis 13b, which works as a cantilever arm. Accordingly, when center axis 13b is driven to rotate, rigid core 12 also rotates around the center axis. Center axis 13b and rigid core 12 are fixed together using removable connector members.

Rigid core 12 includes, for example, an approximately doughnut-shaped core body 17 made up of multiple core segments 17a arranged in a tire circumferential direction, and inner tube 18 which holds each of core segments 17a on its peripheral surface.

On the external surface of core body 17, various rubber members are laminated to form a raw tire. When roughly divided, the external surface of core body 17 includes tread-molding surface 24 to form a tread section of tire inner cavity S, sidewall-molding surface 25 to form a sidewall section of tire inner cavity S, and bead-molding surface 26 to form a bead section of tire inner cavity S.

Using the aforementioned production apparatus 11, the manufacturing method of the present embodiment is described below.

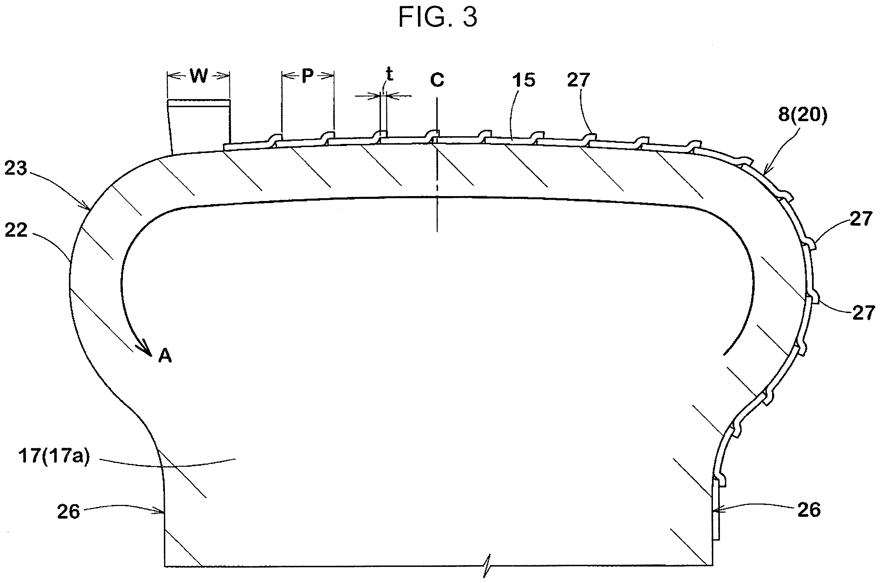

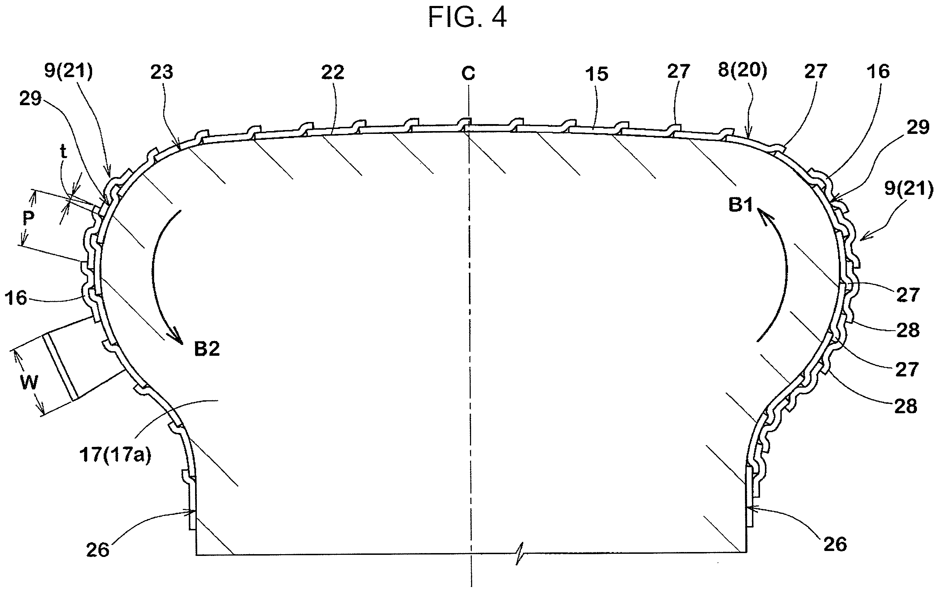

The method for manufacturing a tire 1 of the present invention includes a step for forming first rubber layer 20 using first rubber strip 15 made of a first composition as shown in FIG. 3; and a step for forming second rubber layer 21 using second rubber strip 16 made of a second composition as shown in FIG. 4. Each of rubber strips 15, 16 is unvulcanized and forms part of a raw tire.

In the description of the present embodiment, first rubber layer 20 corresponds to inner liner 8, and second rubber layer 21 corresponds to insulation layer 9. Therefore, a butyl rubber or butyl-based rubber composition having excellent air impermeability properties is used for first rubber strip 15, while a composition mainly containing natural rubber, for example, having excellent adhesiveness properties is used for second rubber strip 16.

As shown in FIG. 3, inner liner 8 as first rubber layer 20 is formed by winding first rubber strip 15 on external surface 22 of core body 17.

In the present embodiment, first, the starting point to wind first rubber strip 15 is fixed onto bead-molding surface 26 on one side (right side) of core body 17. Unvulcanized first rubber strip 15 is fixed to the starting point by using its own adhesiveness.

Next, rigid core 12 is rotated by support device 13 (see FIG. 2), and applicator 14 is moved along external surface 22 of core body 17 in the direction of arrow A at a predetermined speed. Accordingly, first rubber strip 15 is wound on the circumference of the core in the direction of arrow A shown in FIG. 3, which is a first helical direction going from one bead-molding surface 26 toward the other bead-molding surface 26 (on the left side).

At that time, by controlling the moving speed of applicator 14, for example, first rubber strip 15 is wound so that a crosswise side edge overlaps another side edge of first rubber strip 15 that has already been wound on core body 17. Accordingly, a first overlapped portion 27 is formed where portions of first rubber strip 15 overlap each other. First overlapped portions 27 are formed continuously in a helical pattern along first rubber strip 15.

In the present embodiment, first rubber strip 15 is wound at a substantially constant pitch P. Pitch P is the length covered by first rubber strip 15 when it moves along external surface 22 of core body 17 in a radial direction while rigid core 12 rotates once. The length corresponds to an approximate distance obtained by subtracting width t of a first overlapped portion 27 from width W of first rubber strip 15. Width t of a first overlapped portion 27 is not limited specifically, but is set, for example, at approximately no greater than 40%, preferably no greater than 30%, of width W of first rubber strip 15.

Then, when first rubber strip 15 reaches the other bead-molding surface 26, the rotation of rigid core 12 is halted. In addition, first rubber strip 15 is cut off from the applicator. Accordingly, inner liner 8 is formed on the outer side of core body 17, extending from one bead-molding surface 26 to reach the other bead-molding surface 26. Inner liner 8 of the present embodiment is formed with one continuous first rubber strip 15.

As shown in FIG. 4, a step for forming insulation layer 9 as second rubber layer 21 is conducted by winding second rubber strip 16 on one side (right side) and on the other side (left side) of the external surface of inner liner 8.

First, in a step forming an insulation layer 9 on one side, the starting point to wind second rubber strip 16 is fixed onto inner liner 8, which is near bead-molding surface 26 on one side. At that time, second rubber strip 16 is preferred to be fixed to cover a first overlapped portion 27, for example.

Next, rigid core 12 is rotated by support device 13 (see FIG. 2), while applicator 14 is moved along the external surface of the core body in the direction of arrow B1. At that time, the rotation direction of rigid core 12 is set so that second rubber strip 16 is wound in the same helical direction as that of first rubber strip 15. Accordingly, second rubber strip 16 is wound on the tire radially outer side, starting from one bead-molding surface 26 in the direction of arrow B1 shown in FIG. 4, namely, in the same helical direction as that of first rubber strip 15. In the present embodiment, second rubber strip 16 is also wound at substantially constant pitch P, the same as first rubber strip 15.

In addition, an edge of second strip 16 is placed to overlap another edge of second rubber strip 16 which already has been wound on inner liner 8. Accordingly, a second overlapped portion 28 is formed where portions of second rubber strip 16 overlap each other. Second overlapped portions 28 make a helical pattern on insulation layer 9. Moreover, a second overlapped portion 28 is formed between adjacent first overlapped portions 27 of inner liner 8. In other words, a second overlapped portion 28 is formed not to overlap a first overlapped portion 27.

Next, when second rubber strip 16 reaches the vicinity of buttress 29, which is the tire radially outer region of sidewall-molding surface 25, the rotation of rigid core 12 is halted, and second rubber strip 16 is cut off from the applicator. Accordingly, insulation layer 9 on one side is formed with one continuous second rubber strip 16.

As described above, second rubber strip 16 is wound over first strip 15 to be parallel, or at an angle close to parallel, to first rubber strip 15. Such a setting contributes significantly to preventing first rubber strip 15 and second rubber strip 16 from crossing, thereby forming a flat adhesion interface between the strips. Also, because of such a setting, air is prevented from being trapped between first rubber strip 15 and second rubber strip 16, and molding defects or the like are also prevented during the vulcanization process. In addition, the laminate made up of inner liner 8 and insulation layer 9 is made to have notably small variations in its thickness. As a result, the adhesiveness of the laminate to other tire members is improved and tire productivity is enhanced.

Insulation layer 9 on the other side is formed the same as the insulation layer 9 on one side. Namely, the starting point to wind second rubber strip 16 is fixed onto buttress 29 on the other side of inner liner 8. At that time, second rubber strip 16 is fixed, for example, to cover a first overlapped portion 27, the same as on the one side. Then, rigid core 12 is rotated by support device 13 (see FIG. 2), while applicator 14 is moved in the direction of arrow B2. Accordingly, second rubber strip 16 is wound from the other buttress 29 toward the other bead-molding surface 26 in the direction of arrow B2 in FIG. 4, the same helical direction as that of first rubber strip 15. As a result, insulation layer 9 on the other side is formed with one continuous second rubber strip 16.

The thicknesses of first rubber strip 15 and second rubber strip 16 are each preferred to be 0.5 mm or greater, for example, to obtain strength that prevents breaking during winding, and 3.0 mm or less, for example, to obtain a predetermined cross-sectional shape when helically wound. From the same viewpoints, widths W of first rubber strip 15 and second rubber strip 16 are each preferred to be set in a range of 5 to 50 mm, for example.

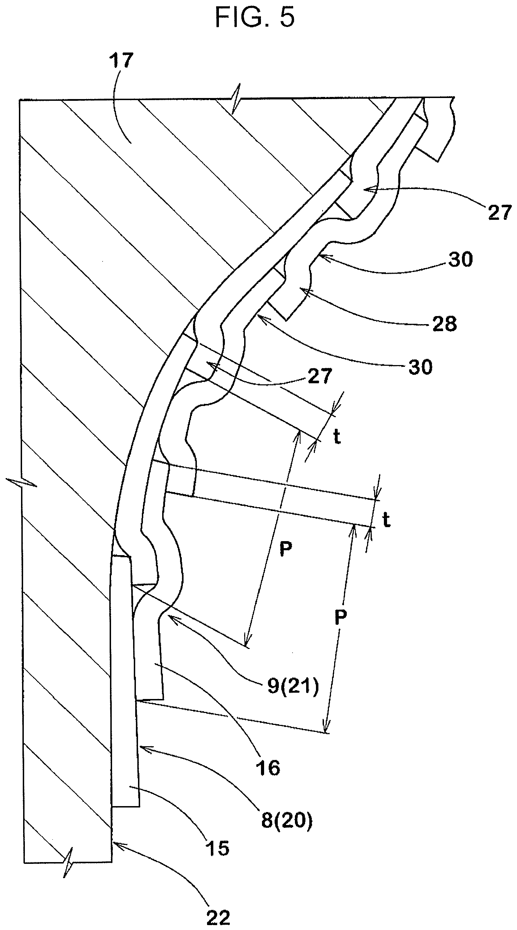

FIG. 5 is an enlarged view showing part of bead-molding surface 26 on one side (right side) of rigid core 12 shown in FIG. 4. As shown in FIG. 5, in a step for forming insulation layer 9, space 30 is preferred to be formed, for example, between a first overlapped portion 27 and a second overlapped portion 28 adjacent to each other. Space 30 is formed by distancing first overlapped portion 27 from second overlapped portion 28. Space 30 is double-layered, formed only with first rubber strip 15 and second rubber strip 16. Spaces 30 are also formed to make a helical pattern in the first helical direction.

When carcass ply 6a (see FIG. 1) is provided on the outer side of insulation layer 9, spaces 30 make a continuous channel for discharging air between insulation layer 9 and carcass ply 6a. Spaces 30 contribute to further suppressing air from remaining between second rubber strip 16 and carcass ply 6a. Also, since spaces 30 increase the surface area of insulation layer 9, they contribute to further strongly adhering inner liner 8 and carcass ply 6a.

Rigid core 12 is structured to be circular on a side view, and the circumferential distance on its radially outer side is set greater than the circumferential distance on its radially inner side. Accordingly, when first rubber strip 15 and second rubber strip 16 are wound on the side surface of external surface 22 of core body 17 or on the external surface of inner liner 8, the radially outer-side edge is stretched while the radially inner-side edge is compressed. Accordingly, when first rubber strip 15 and second rubber strip 16 are wound, the thickness of the radially outer-side edge tends to be smaller than the thickness of the radially inner-side edge. Thus, a step for decreasing pitch P when winding first rubber strip 15 in a helical pattern is included in a step for forming inner liner 8.

For example, on bead-molding surface 26 or sidewall-molding surface 25 where the curvature radius is greater, pitch P of first rubber strip 15 is preferred to be gradually made smaller toward the tire radially inner side so as to widen width t of a first overlapped portion 27. Such a setting is preferred since the thickness of inner liner 8 is more likely to be uniform and a reduction in strength is prevented even when the thickness of the radially inner-side edge of first rubber strip 15 is reduced. The same setting applies to a step for forming insulation layer 9.

In the manufacturing method of the present embodiment, after insulation layer 9 is formed, carcass ply 6a (see FIG. 1) is provided on the outer side of inner liner 8 and insulation layer 9. Since the laminate made up of inner liner 8 and insulation layer 9 has a smaller variation in its thickness in the present embodiment, the adhesiveness between the laminate and carcass ply 6a is improved. In addition, when carcass ply 6a is laminated, spaces 30 are made flat. Then, other tire rubber members such as belt layer 7 (see FIG. 1) are provided on the outer side of carcass ply 6a, and a raw tire is formed (its entire view is omitted in the drawings). The raw tire is vulcanized with rigid core 12 in a die to obtain pneumatic tire 1.

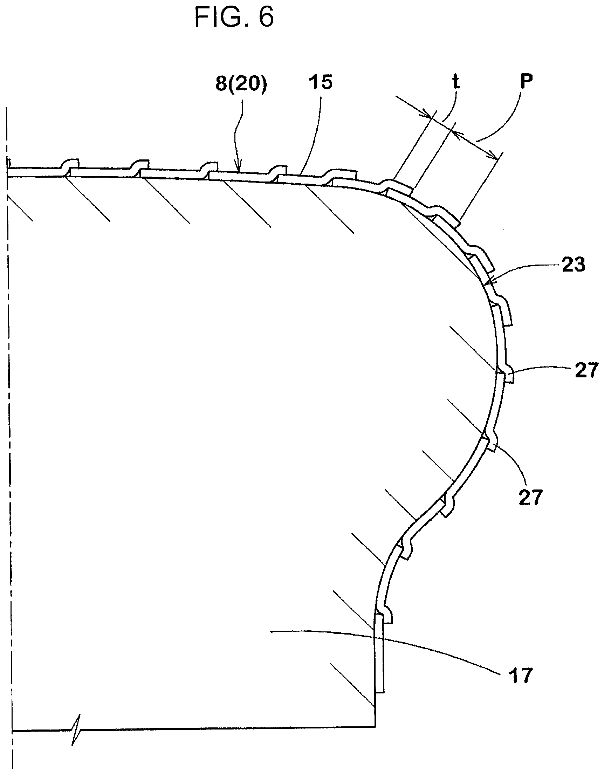

FIG. 6 is a cross-sectional view partially enlarging one side of inner liner 8 formed by an embodiment of the present invention. Generally speaking, in the region of buttress 29 of tire 1, the thickness of rubber members is smaller than that of other sections, thus its strength is relatively low. A step for forming inner liner 8 according to the embodiment shown in FIG. 6 further includes a step for reducing pitch P when first rubber strip 15 is wound on buttress region 23 of core body 17. Such a step increases the thickness of inner liner 8 on buttress 29 of tire 1 and enhances the strength in the region. In the embodiment shown in FIG. 6, a step for forming insulation layer 9 is preferred to further include a step for modifying pitch P when winding second rubber strip 16 to correspond to pitch P when winding first rubber strip 15 (omitted from the drawing).

In the disclosure above, first rubber layer 20 is formed as inner liner 8 and second rubber layer 21 is formed as insulation layer 9. However, the present invention is not limited to such a combination. Needless to say, the present invention can be applied to any combination of two rubber members positioned at least partially adjacent.

### [Embodiment]

A test passenger-car pneumatic tire (size: 215/45R17) having an inner liner and insulation layer was prepared according to the manufacturing method related to the present invention, and the tire performance was tested. Also, as a comparative example, a test passenger-car pneumatic tire was prepared by winding a first rubber strip from one side toward the other side to form the inner liner, and by winding a second rubber strip from the other side toward the one side to form the insulation layer. The test method is shown below.

A hundred tires were produced for each test tire. An inspector visually checked whether there were any molding defects (such as dents) caused by the residual air on the tire inner cavity. As a result, 55 tires of the comparative example were found to have molding defects caused by the residual air. By contrast, only one tire of the embodiment showed molding defects.

### [DESCRIPTION OF NUMERICAL REFERENCES]

- 1: pneumatic tire
- 12: rigid core
- 15: first rubber strip
- 16: second rubber strip
- 20: first rubber layer
- 21: second rubber layer
- 27: first overlapped portion
- 28: second overlapped portion

In order to provide a manufacturing method capable of reducing molding defects in the production of a pneumatic tire, the method for manufacturing a pneumatic tire 1 uses a rigid core 12 and includes the following steps: by helically winding a first rubber strip 15 made of a first composition on the outer side of the rigid core 12 in a circumferential direction of the core, a step for forming a first rubber layer 20 where first overlapped portions 27 are formed in a helical pattern by overlapping side edges of the first rubber strip 15; and by helically winding a second rubber strip 16 made of a second composition on the external surface of the first rubber layer 20 in the same direction as that of the first rubber strip 15, a step for forming a second rubber layer 21 where second overlapped portions 28 are formed in a helical pattern by overlapping side edges of the second rubber strip 16. In the step for forming the second rubber layer 21, the second rubber strip 16 is wound so as to form a second overlapped portion 28 between adjacent first overlapped portions 27. The step for forming a first rubber layer further comprises a step for increasing the thickness of the first rubber layer in a buttress region by reducing the pitch when winding the first rubber strip in the buttress region of the rigid core.

## Claims

1. A method for manufacturing a pneumatic tire (1) using a rigid core (12) having an external surface to form the inner cavity (S) of a tire, comprising:
by helically winding a first rubber strip (15) made of a first composition on the outer side of a rigid core (12) in a circumferential direction of the core, a step for forming a first rubber layer (20) where first overlapped portions (27) are formed in a helical pattern by overlapping side edges of the first rubber strip (15); and
by helically winding a second rubber strip (16) made of a second composition on the external surface of the first rubber layer (20) in the same direction as that of the first rubber strip (15), a step for forming a second rubber layer (21) where second overlapped portions (28) are formed in a helical pattern by overlapping side edges of the second rubber strip (16),
wherein, in the step for forming the second rubber layer (21), the second rubber strip (16) is wound so as to form a second overlapped portion (28) between adjacent first overlapped portions (27), and
wherein the step for forming a first rubber layer (20) further comprises a step for increasing the thickness of the first rubber layer (20) in a buttress region (23) by reducing the pitch when winding the first rubber strip (15) in the buttress region (23) of the rigid core (12).

2. The method for manufacturing a pneumatic tire (1) according to Claim 1, wherein the first rubber layer (20) is an inner liner (8) that forms the tire inner cavity (S) and the second rubber layer (21) is an insulation layer (9) provided on the outer side of the inner liner (8) on a side surface of the tire (1).

3. The method for manufacturing a pneumatic tire (1) according to Claim 1 or 2, wherein in the step for forming a second rubber layer (21), the second rubber strip (16) is wound so as to form a space between first and second overlapped portions (28) adjacent to each other.

## Patentansprüche

1. Verfahren zur Herstellung eines Luftreifens (1) unter Verwendung eines starren Kerns (12) mit einer Außenfläche zum Bilden des inneren Hohlraums (S) eines Reifens, umfassend:
durch schraubenförmiges Wickeln eines ersten Gummibandes (15) aus einer ersten Zusammensetzung auf der Außenseite eines starren Kerns (12) in Umfangsrichtung des Kerns, einen Schritt zum Bilden einer ersten Gummischicht (20), wobei erste überlappte Abschnitte (27) in einem schraubenförmigen Muster durch überlappende Seitenkanten des ersten Gummibandes (15) gebildet werden; und
durch schraubenförmiges Wickeln eines zweiten Gummistreifens (16) aus einer zweiten Zusammensetzung auf der Außenfläche der ersten Gummischicht (20) in die gleiche Richtung wie die des ersten Gummistreifens (15), einen Schritt zum Bilden einer zweiten Gummischicht (21), wobei zweite überlappte Abschnitte (28) in einem schraubenförmigen Muster durch überlappende Seitenkanten des zweiten Gummistreifens (16) ausgebildet sind,
wobei in dem Schritt zum Bilden der zweiten Gummischicht (21) der zweite Gummistreifen (16) so gewickelt wird, dass er einen zweiten überlappenden Abschnitt (28) zwischen benachbarten ersten überlappenden Abschnitten (27) bildet, und
wobei der Schritt zum Bilden einer ersten Gummischicht (20) ferner einen Schritt zum Erhöhen der Dicke der ersten Gummischicht (20) in einem Stützbereich (23) durch Reduzieren der Neigung beim Wickeln des ersten Gummistreifens (15) in dem Stützbereich (23) des starren Kerns (12) umfasst.

2. Verfahren zur Herstellung eines Luftreifens (1) nach Anspruch 1, wobei die erste Gummischicht (20) eine Innenauskleidung (8) ist, die den inneren Hohlraum (S) des Reifens bildet, und die zweite Gummischicht (21) eine Isolierschicht (9) ist, die auf der Außenseite der Innenauskleidung (8) auf einer Seitenfläche des Reifens (1) vorgesehen ist.

3. Verfahren zur Herstellung eines Luftreifens (1) nach Anspruch 1 oder 2, wobei im Schritt zum Bilden einer zweiten Gummischicht (21) der zweite Gummistreifen (16) so gewickelt wird, dass er einen Raum zwischen ersten und zweiten überlappten Abschnitten (28) benachbart zueinander bildet.

## Revendications

1. Procédé de fabrication d'un pneumatique (1) utilisant un noyau rigide (12) ayant une surface externe pour former la cavité interne (S) d'un pneumatique, comprenant :
en enroulant de manière hélicoïdale une première bande de caoutchouc (15) constituée d'une première composition sur le côté externe d'un noyau rigide (12) dans une direction circonférentielle du noyau, une étape de formation d'une première couche de caoutchouc (20) où des premières parties chevauchantes (27) sont formées en un motif hélicoïdal en faisant se chevaucher des bords latéraux de la première bande de caoutchouc (15) ; et
en enroulant de manière hélicoïdale une seconde bande de caoutchouc (16) constituée d'une seconde composition sur la surface externe de la première couche de caoutchouc (20) dans la même direction que celle de la première bande de caoutchouc (15), une étape de formation d'une seconde couche de caoutchouc (21) où des secondes parties chevauchantes (28) sont formées en un motif hélicoïdal en faisant se chevaucher des bords latéraux de la seconde bande de caoutchouc (16),
dans lequel, dans l'étape de formation de la seconde couche de caoutchouc (21), la seconde bande de caoutchouc (16) est enroulée de sorte à former une seconde partie chevauchante (28) entre des premières parties chevauchantes (27) adjacentes, et
dans lequel l'étape de formation d'une première couche de caoutchouc (20) comprend en outre une étape d'augmentation de l'épaisseur de la première couche de caoutchouc (20) dans une région de contrefort (23) en réduisant le pas lors de l'enroulement de la première bande de caoutchouc (15) dans la région de contrefort (23) du noyau rigide (12).

2. Procédé de fabrication d'un pneumatique (1) selon la revendication 1, dans lequel la première couche de caoutchouc (20) est un revêtement interne (8) qui forme la cavité interne (S) du pneumatique et la seconde couche de caoutchouc (21) est une couche d'isolation (9) prévue sur le côté externe du revêtement interne (8) sur une surface latérale du pneumatique (1).

3. Procédé de fabrication d'un pneumatique (1) selon la revendication 1 ou 2, dans lequel dans l'étape de formation d'une seconde couche de caoutchouc (21), la seconde bande de caoutchouc (16) est enroulée de sorte à former un espace entre les premières et secondes parties chevauchantes (28) adjacentes les unes aux autres.
